# EUROPEAN PATENT APPLICATION

(11) **EP 4 290 469 A1**
(43) Date of publication of application: **13.12.2023**
(21) Application number: 22871166.9
(22) Date of filing: 27.10.2022
(51) Int. Cl.: G06T 19/20

(54) **MESH MODEL PROCESSING METHOD AND APPARATUS, ELECTRONIC DEVICE, AND MEDIUM**

(30) Priority: 22.04.2022 CN 202210432059
(71) Applicant: Beijing Zitiao Network Technology Co., Ltd., Beijing 100190 (CN)
(72) Inventor: WANG, Zhiyong, Beijing 100086 (CN)
(74) Representative: Dentons UK and Middle East LLP
(86) International application number: PCT/CN2022/127845
(87) International publication number: WO 2023/202022

(57) **Abstract**

Provided are a mesh model processing method and apparatus, an electronic device and a medium. The mesh model processing method includes steps described below. In a case where it is detected that a model clipping condition is satisfied, a clipping plane corresponding to a to-be-clipped model is determined; a target triangular patch and a to-be-processed triangular patch intersecting the clipping plane and a clipping point corresponding to the to-be-processed triangular patch are determined in the to-be-clipped model based on the clipping plane; the to-be-processed triangular patch is processed based on the clipping point corresponding to the to-be-processed triangular patch to update the target triangular patch in the to-be-clipped model, and at least one bottom patch is determined in the to-be-clipped model according to the clipping point corresponding to the to-be-processed triangular patch and information of vertices located on the clipping plane; and a target clipping model is determined according to the updated target triangular patch and the at least one bottom patch.

## Description

This application claims priority to Chinese Patent Application No. 202210432059.2 filed with the China National Intellectual Property Administration (CNIPA) on Apr. 22, 2022, the disclosure of which is incorporated herein by reference in its entirety.

### TECHNICAL FIELD

The present disclosure relates to the field of computer technologies, for example, a mesh model processing method and apparatus, an electronic device and a medium.

### BACKGROUND

When an augmented reality (AR) special effect video is generated, to improve the flexibility of an object, the model will be clipped accordingly to obtain a local three-dimensional model.

Clipping on models is mostly achieved in the manners described below. Vertices on one side of a clipping plane in a target three-dimensional model are discarded, and a three-dimensional model is reconstructed based on information of remained vertices. Alternatively, the clipping plane is processed as a clipping model, and part of vertices are selected from the clipping model and the target three-dimensional model, respectively, by using a method similar to collision detection so as to construct a new model.

However, in the preceding manners, the separation plane cannot be kept consistent with the clipping plane, leading to unsatisfactory effects; as a result, it is difficult to obtain other information of newly added vertices. For example, if the application scene is to clip a user trunk model, positioning information of the bone cannot be obtained, resulting in the problem of goof during the model movement.

### SUMMARY

The present disclosure provides a mesh model processing method and apparatus, an electronic device and a medium, so as to ensure the segmentation plane of a to-be-clipped model to be flat, solve the problem of holes appearing in the segmentation plane, and improve the authenticity of the displayed model.

In a first aspect, the present disclosure provides a mesh model processing method. The method includes steps described below.

In a case where it is detected that a model clipping condition is satisfied, a clipping plane corresponding to a to-be-clipped model is determined.

A target triangular patch and a to-be-processed triangular patch intersecting the clipping plane and a clipping point corresponding to the to-be-processed triangular patch are determined in the to-be-clipped model based on the clipping plane.

The to-be-processed triangular patch is processed based on the clipping point corresponding to the to-be-processed triangular patch to update the target triangular patch in the to-be-clipped model, and at least one bottom patch is determined in the to-be-clipped model according to the clipping point corresponding to the to-be-processed triangular patch and information of vertices located on the clipping plane.

A target clipping model is determined according to updated the target triangular patch and the at least one bottom patch in the to-be-clipped model.

In a second aspect, the present disclosure further provides a mesh model processing apparatus. The apparatus includes a plane determination module, a clipping point determination module, a bottom patch determination module and a target video determination module.

The plane determination module is configured to, in a case where it is detected that a model clipping condition is satisfied, determine a clipping plane corresponding to a to-be-clipped model.

The clipping point determination module is configured to determine, in the to-be-clipped model and based on the clipping plane, a target triangular patch and a to-be-processed triangular patch intersecting the clipping plane and a clipping point corresponding to the to-be-processed triangular patch.

The bottom patch determination module is configured to process the to-be-processed triangular patch based on the clipping point corresponding to the to-be-processed triangular patch to update the target triangular patch in the to-be-clipped model, and determine at least one bottom patch in the to-be-clipped model according to the clipping point corresponding to the to-be-processed triangular patch and information of vertices located on the clipping plane.

The target video determination module is configured to determine a target clipping model according to the updated target triangular patch and the at least one bottom patch in the to-be-clipped model.

In a third aspect, the present disclosure further provides an electronic device. The electronic device includes one or more processors and a storage apparatus configured to store one or more programs.

The one or more programs, when executed by the one or more processors, cause the one or more processors to implement the preceding model processing method.

In a fourth aspect, the present disclosure further provides a storage medium including computer-executable instructions which, when executed by a computer processor, are configured to execute the preceding model processing method.

### BRIEF DESCRIPTION OF DRAWINGS

FIG. 1 is a flowchart of a mesh model processing method according to an embodiment of the present disclosure;
FIG. 2 is a diagram showing the structure of a patch type according to an embodiment of the present disclosure;
FIG. 3 is a diagram showing the structure of another patch type according to an embodiment of the present disclosure;
FIG. 4 is a view showing the structure of a to-be-clipped model and the structure of a target clipping model according to an embodiment of the present disclosure;
FIG. 5 is a diagram showing the structure of a mesh model processing apparatus according to an embodiment of the present disclosure; and
FIG. 6 is a diagram showing the structure of an electronic device according to an embodiment of the present disclosure.

### DETAILED DESCRIPTION

Embodiments of the present disclosure are described hereinafter with reference to the drawings.

Although some embodiments of the present disclosure are shown in the drawings, the present disclosure may be implemented in multiple forms, and these embodiments are provided for understanding of the present disclosure. The drawings and the embodiments of the present disclosure are merely illustrative.

Multiple steps recited in the method embodiments of the present disclosure may be performed in a different order, and/or in parallel. In addition, the method embodiments may include additional steps and/or omit execution of illustrated steps. The scope of the present disclosure is not limited in this respect.

The term "includes" used herein means "includes, but is not limited to". The term "based on" used herein means "at least partially based on". The term "an embodiment" used herein means "at least one embodiment". The term "another embodiment" used herein means "at least another embodiment". The term "some embodiments" used herein means "at least some embodiments". Related definitions of other terms are given in the description hereinafter.

References to "first", "second" and the like in the present disclosure are merely intended to distinguish one from another apparatus, module or unit and are not intended to limit the order or interrelationship of the functions performed by the apparatus, module or unit.

References to "one" or "multiple" in the present disclosure are illustrative and non-restrictive and those skilled in the art should understand that "one" or "multiple" is interpreted as "one or more" unless otherwise specified in the context.

Before the technical solutions are introduced, application scenes may be exemplified. The technical solutions may be applied to any scene where a three-dimensional (3D) model needs to be clipped. For example, in the process of generating a special effect video, if the model is required to have a relatively good effect for presentation, a part for performing flexible movements is usually clipped, so as to avoid holes appearing in the display interface. That is, the technical solutions may be applied to any type of scenes where a model needs to be clipped. In the technical solutions, the 3D model may be a mesh model.

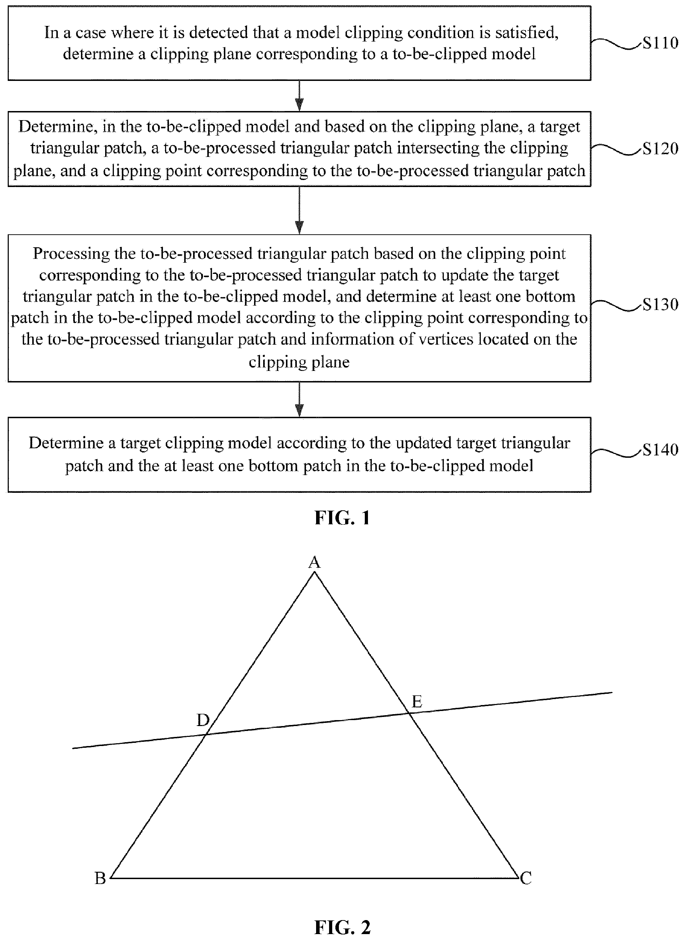

FIG. 1 is a flowchart of a mesh model processing method according to an embodiment of the present disclosure. The embodiment of the present disclosure is applicable to the case of different scenes where a displayed to-be-clipped model needs to be clipped. For example, the application scene may be a video scene, a 3D model processing scene, a special effect video processing scene, etc. The method may be executed by a model processing apparatus. The apparatus may be implemented in the form of software and/or hardware, for example, by an electronic device which may be a mobile terminal, a personal computer (PC) terminal or a server. The implementation of the technical solutions may be executed by a service terminal, may be executed by a client, or may be executed by a service terminal and a client cooperating with each other.

As shown in FIG. 1, the method includes steps described below.

In S110, in a case where it is detected that a model clipping condition is satisfied, a clipping plane corresponding to a to-be-clipped model is determined.

The apparatus for executing model processing provided in the embodiment of the present disclosure may be integrated in application software supporting image processing functions, and the software may be installed in an electronic device which, for example, may be a mobile terminal or a PC terminal. The application software may be a type of software for processing a model in a video, and the application software is not described in detail herein, as long as image/video processing can be implemented. The application software may also be a specially-developed application program or may be integrated into a corresponding page, and a user can achieve image processing through the integrated page in a PC terminal.

Generally, the presentation of three-dimensional models is mostly embodied in video scenes. A video is composed of multiple video frames. Each video frame may or may not include a three-dimensional model. The three-dimensional model may be a to-be-clipped model, and the to-be-clipped model may be a model corresponding to any target subject, or an augmented reality (AR) special effect model. The target subject may be a user, a pet and the like in a captured picture. That is, when the captured picture includes the corresponding target subject, a model corresponding to the target subject may be created and used as the to-be-clipped model. Accordingly, when the to-be-clipped model is clipped, the basis for clipping may be determined, that is, which reference plane is used as the reference for clipping may be determined, and the equation of this reference plane may be used as a clipping plane equation. For example, the clipping plane equation may be that ax+by+cz+d=0.

To improve the convenience and effectiveness of model clipping, the model may be clipped when it is detected that a model clipping condition is satisfied. The model clipping condition includes at least one of conditions described below. It is detected that a model clipping control is triggered; a display picture includes the to-be-clipped model; collected audio information triggers a model clipping instruction; a playing timestamp of a current video frame is consistent with a preset clipping timestamp; it is determined based on display information in a display interface that model clipping is satisfied; or it is determined based on an input condition that model clipping is satisfied.

In practical applications, the display interface may include a clipping control, and when the user triggers the clipping control, it is indicated that the model clipping condition is satisfied and the to-be-clipped model needs to be clipped. It may also be that in a scene of generating an AR special effect video, it is considered that the model clipping condition is satisfied as long as the inclusion of the to-be-clipped model is detected. Alternatively, it may be that to improve the intelligence of interaction, speech information of the user may be collected based on a microphone array on a terminal device; if the speech information triggers a clipping instruction, for example, the speech information is "start clipping", and thus it is indicated that the model clipping condition is satisfied. It may also be that a presentation timestamp of a special effect model in a video may be determined; if a current playing timestamp is consistent with the presentation timestamp, that is, is consistent with a preset clipping timestamp, it is determined that the model clipping condition is triggered.

To improve the intelligence, it may also be considered that the model clipping condition is triggered as long as the to-be-clipped model appears in the display interface, and a triggering event of the clipping condition may be set according to actual requirements, which is not limited herein.

Whether the model clipping condition is satisfied may be determined according to display information in the display interface. For example, the display information may be the displayed to-be-clipped model, or may be other information in the picture. The process of controlling the information input into the display interface by a gamepad is used as an input condition. For example, a 3D model is controlled to move based on the control of the gamepad, thus the input condition may be the movement controlled by the gamepad, and accordingly, the leg part needs to be clipped, that is, the model clipping condition is satisfied.

In the embodiment, the step in which the clipping plane corresponding to the to-be-clipped model includes steps described below. Type information of the to-be-clipped model is determined; and the clipping plane is determined according to the type information.

Different to-be-clipped models require different clipping plane equations. After it is determined that a current to-be-processed video frame includes the to-be-clipped model, the type information corresponding to the to-be-clipped model may be determined, and the clipping plane equation corresponding to the type information is called. That is, corresponding relationships between different to-be-clipped models and corresponding clipping plane equations may be pre-established, so that the clipping plane equation corresponding to the to-be-clipped model is determined based on the corresponding relationships. Exemplarily, model identifiers corresponding to different to-be-clipped models are preset, and corresponding relationships between the model identifiers and corresponding clipping plane equations are established. After it is determined that the current to-be-processed video frame includes the to-be-clipped model, the model identifier corresponding to the to-be-clipped model may be determined, and the clipping plane equation corresponding to the model identifier is determined according to the corresponding relationships.

The clipping plane may also be determined based on speech information or a triggering operation. For example, the user may use a mouse to slide on the display interface, so that a plane is fitted based on the sliding trajectory as the clipping plane. Alternatively, the plane to which the starting point belongs and parallel to the horizontal plane is used as the clipping plane.

Exemplarily, the type information may be at least one of a pet model or a user model. If it is determined that the to-be-clipped model displayed in the display interface is a user model, it is determined that the clipping plane equation is consistent with the plane corresponding to the waist, and if the to-be-clipped model is a pet model, the plane equation may be consistent with the plane corresponding to the head.

In the preceding manner of determining the clipping plane, the convenience of determining the clipping plane can be improved, and the convenience of model clipping can be improved.

In S120, a target triangular patch, a to-be-processed triangular patch intersecting the clipping plane, and a clipping point corresponding to the to-be-processed triangular patch are determined in the to-be-clipped model based on the clipping plane.

The to-be-clipped model is composed of multiple triangular patches. The to-be-clipped model may be described by three-dimensional coordinates of vertices of triangular patches and numbers of vertices that form triangles. Each triangular patch may be referred to as a to-be-clipped mesh.

Generally, a plane can divide the space into two parts, and accordingly, a clipping plane equation can divide the to-be-clipped model into two parts, for example, a first part model and a second part model located on two sides of the clipping plane, respectively. Patches located on one side of the clipping plane may be set as the target triangular patches, and patches on the other side of the clipping plane are triangular patches that need to be discarded. Part of triangular patches intersects the clipping plane, and triangular patches of this type are taken as to-be-processed triangular patches. In practical applications, if a triangular patch intersects the clipping plane, at least one intersection point exists and may be taken as the clipping point.

Patches located on a first side of the clipping plane equation may be determined as the target triangular patches based on the clipping plane equation, patches located on the other side of the clipping plane equation are taken as the discarded triangular patches, and patches intersecting the clipping plane to which the clipping plane equation belongs are taken as the to-be-processed triangular patches. Generally, a target clipping model does not include discarded triangular patches.

In the embodiment, the target triangular patches and the to-be-processed triangular patches may be determined in the manner described below. For each triangular patch, relative position information of three vertices of a current triangular patch and the clipping plane is determined; and in a case where it is determined based on the relative position information that the three vertices are all located on a first side of the clipping plane, the current triangular patch is determined as a target triangular patch; in a case where it is determined based on the relative position information that the three vertices are located on two different sides of the clipping plane, the current triangular patch is determined as a to-be-processed triangular patch.

Each triangular patch is processed in the same manner. The processing on one triangular patch may be used as an example for illustration, and the triangular patch currently introduced is used as the current triangular patch.

Each triangular patch includes at least three vertices, and information of the vertices of the triangular patch may be determined according to arrangement information of the triangular patch on the to-be-clipped model or display information in the display interface. Information of a vertex includes vertex coordinates. The vertex coordinates may be spatial three-dimensional coordinates. The relative position information may be that the vertex is located on which side of the clipping plane. Exemplarily, the information of the vertex is substituted into the clipping plane equation corresponding to the clipping plane. If the obtained value is greater than 0, it is indicated that the vertex is above the clipping plane; if the obtained value is less than 0, it is indicated that the vertex is below the clipping plane.

Information of three vertices of the current triangular patch is acquired, and the information of the three vertices is separately substituted into the equation corresponding to the clipping plan. If obtained function values are all greater than 0, it is indicated that the current triangular patch is located on a first side of the clipping plane, that is, is above the clipping plane, and such a triangular patch may be used as a target triangular patch. If obtained function values are all less than 0, it is indicated that the current triangular patch is on a second side of the clipping plane, that is, is below the clipping plane, and such a triangular patch may be discarded. Accordingly, if a function value greater than 0 and a function value less than 0 both exist, the current triangular patch is determined as a to-be-processed triangular patch.

After the current triangular patch is determined as the to-be-processed triangular patch, the step described below is further included. At least one vertex group corresponding to the to-be-processed triangular patch is determined according to information of a vertex located on the first side of the clipping plane and information of a vertex located on the second side of the clipping plane. The vertex group includes vertex information of two to-be-processed vertices.

Exemplarily, a patch identifier, vertex numbers and vertex coordinates of each triangular patch and a patch identifier to which each triangle edge belongs may be predetermined. Each triangular patch in the to-be-clipped model is traversed. Coordinates of each triangular patch may be processed in the manner described below. If coordinates of vertex A of the current triangular patch are (xo, yo, z₀), the coordinates of vertex A may be substituted into the clipping plane equation to obtain that e=a*x₀+b*y₀+c*z₀+d. If e>0, it is indicated that vertex A is located above the clipping plane to which the clipping plane equation belongs; if e<0, it is indicated that vertex A is located below the clipping plane to which the clipping plane equation belongs. Based on the value of e, the relative position information of each vertex in the current triangular patch and the clipping plane can be determined, and then whether the current triangular patch is a to-be-processed triangular patch can be determined. For two vertices, if the value of e corresponding to one vertex satisfies that e>0 and the value of e corresponding to the other vertex satisfies that e<0, it is indicated that the current triangular patch is a to-be-processed triangular patch, and two vertex groups can be constructed, that is, two clipping points can be determined.

After the vertex group is determined, the clipping point may be determined based on information of vertices in the vertex group. For example, for each vertex group, two to-be-processed distances from vertex information of two to-be-processed vertices in a current vertex group to the clipping plane to which the clipping plane equation belongs are separately determined; and a clipping point on a patch line segment corresponding to the vertex information of two to-be-processed vertices is determined according to the two to-be-processed distances and the patch line segment.

Each vertex group includes information of two to-be-processed vertices, and at this time, the vertices corresponding to the information of the two to-be-processed vertices are located on two sides of the clipping plane. A connecting line between two to-be-processed vertices is used as the line segment corresponding to the to-be-processed vertices. Information of distances between the two to-be-processed vertices and the clipping plane may be calculated separately according to a point-to-plane distance formula. The corresponding clipping point is determined according to the ratio of the information of distances and the patch line segment corresponding to the two to-be-processed vertices.

Exemplarily, distances from two vertices in a vertex group to the clipping plane are determined according to the point-to-plane distance formula and are marked as *d₀* and *d₁* respectively, and the clipping point can be determined based on the preceding two distances and the length of the line segment corresponding to the two vertices by using the principle of similarity.

Through the preceding manner for determining the clipping point, the clipping point may subsequently be used as a vertex of the remained clipping model, and the vertex is determined by interpolation based on information of vertices in the to-be-clipped model, so that texture coordinates can be directly generated and bound to the bone.

Based on the preceding technical solutions, the step in which the clipping point on the patch line segment corresponding to the information of two to-be-processed vertices is determined according to the two to-be-processed distances and the patch line segment includes steps described below. Ratio information of the two to-be-processed distances is determined to determine a clipping proportion on the patch line segment according to the ratio information; and the clipping point on the patch line segment is determined based on the clipping proportion and attribute information of the two to-be-processed vertices.

The attribute information may be uv information of the two vertices, for example, may be texture coordinate information, or may be other information, such as normal information, bone binding information, tangent information, etc. Other attribute information may also be set according to actual requirements. The attribute information of the two vertices may be set according to actual requirements, which is not limited here.

For each vertex group, a distance ratio may be determined according to the two to-be-processed distances corresponding to the current vertex group, and the distance ratio may be used as the clipping proportion. Based on the clipping proportion and the attribute information of the two to-be-processed vertices, the attribute information of the clipping point can be obtained by performing interpolation operation on the uv information in the attribute information.

In S 130, the to-be-processed triangular patch is processed based on the clipping points corresponding to the to-be-processed triangular patch to update the target triangular patch in the to-be-clipped model, and at least one bottom patch in the to-be-clipped model is determined according to the clipping point corresponding to the to-be-processed triangular patch and information of vertices located on the clipping plane.

After the to-be-processed triangular patch and the clipping point associated with the to-be-processed triangular patch are determined above, the to-be-processed triangular patch may be processed based on the clipping point to obtain a target triangular patch that can be used. At the same time, to avoid holes appearing in the display process and leading to the problem of goof, the segmentation plane may be filled based on each clipping point. A patch corresponding to the filling process is used as the bottom patch.

In the embodiment, the step in which the target triangular patches on the to-be-clipped model are updated according to the clipping points and the corresponding to-be-processed triangular patches includes steps described below. A patch type of each to-be-processed triangular patch obtained after clipping is determined according to at least two clipping points associated with the each to-be-processed triangular patch; and the target triangular patches on the to-be-clipped model are updated according to the patch type.

Each to-be-processed triangular patch may correspond to at least two clipping points. Two cases may generally occur for clipping on a triangular patch based on two clipping points.

In a first case, one vertex of the each to-be-processed triangular patch is located on the first side of the clipping plane and another two vertices are located on the second side of the clipping plane; in this case, the triangular patch of the to-be-clipped model is clipped as a plane in a new model. As shown in FIG. 2, ABC represents a triangular patch in the to-be-clipped model. The clipping plane intersects two sides AB and AC of the triangular patch at point D and point E respectively. A is inside the clipping plane, B and C are outside the clipping plane, and thus the new triangular patch is the part ADE of the original triangular patch inside the clipping plane. That is, attribute information corresponding to point D and attribute information corresponding to point E can be determined in the preceding manner.

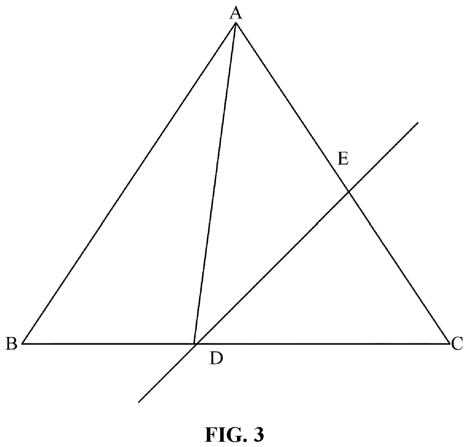

In a second case, two vertices of the each to-be-processed triangular patch are located on the first side of the clipping plane, and another one vertex is located on the other side of the clipping plane. As shown in FIG. 3, ABC represents a triangular patch in the to-be-clipped model. The clipping plane intersects AC and BC at point D and point E respectively, A and B are inside the clipping plane, C is outside the clipping plane, and thus the remained part is the four-sided patch ABDE. To maintain the uniformity of triangular patches, the four-sided patch ABDE is divided into the triangular patch ADE and the triangular patch ABD.

Based on the above, it can be seen that the patch type includes two types, the first type is a non-re-splitting patch type and the second type is a re-splitting patch type. Based on the preceding manner, triangular patches can be newly determined, that is, the target triangular patches on the to-be-clipped model can be updated.

That is, if the patch type is the first type, a target triangular patch is determined according to information of one remained vertex and at least two clipping points of the corresponding to-be-processed triangular patch; if the patch type is the second type, the corresponding to-be-processed triangular patch is divided, according to information of two remained vertices and at least two clipping points of the corresponding to-be-processed triangular patch, into at least two triangular patches, and the divided triangular patches are used as target triangular patches.

The first type refers to a patch type that does not need to be re-split, and a triangular patch may be constructed according to information of a remained vertex of three vertices of the to-be-processed triangular patch and clipping points as a target triangular patch. The second type refers to a patch type that needs to be re-split, the patch obtained after splitting includes four vertices, and two triangular patches may be obtained through re-division based on the four vertices and may be taken as two target triangular patches.

To avoid holes appearing in the display process when the target triangular patch is determined, the bottom patch for encapsulating the splitting plane may also be determined.

The manner for determining the bottom patch may include steps described below. At least one connected region is determined according to each clipping point of the clipping points corresponding to the to-be-processed triangular patches and information of to-be-spliced vertices of the target triangular patches located on the clipping plane; and a central point of the at least one connected region is determined, and at least one bottom patch is determined according to the central point, the information of to-be-spliced vertices and the clipping points.

The vertex of the target triangular patch which is located on the clipping plane is used as a to-be-spliced vertex. That is, for a vertex, if the value obtained by substituting vertex information of the target triangular patch into the clipping plane equation is 0, this vertex is used as a to-be-spliced vertex. The information of the to-be-spliced vertex refers to vertex attribute information of the vertex.

At least one connected region may be determined according to each clipping point and information of vertices on the target triangular patches located on the clipping plane. For example, if the to-be-clipped model is a user trunk model, and the clipping plane equation corresponds to the plane of the clipped waist, the number of connected regions may be one; if the clipping plane equation corresponds to planes of the clipped knees, the number of formed connected regions may be two. The number of connected regions is consistent with the clipped part corresponding to the clipping plane equation. The central point of each connected region may be determined separately. The central point is separately connected to each clipping point and the to-be-spliced vertices to obtain at least one bottom patch. That is, the bottom patch mainly corresponds to the bottom of the segmentation plane.

After clipping, the clipping plane (that is, the segmentation plane) needs to be closed to avoid holes in rendering. Circulating may be performed on all triangles of the current model. If one triangle has two vertices located on the clipping plane, the connection relationship between the two vertices is recorded. Finally, the clipping plane is segmented into connected regions according to connection relationships between all vertices on the clipping plane. A central point is then generated for each connected region as an auxiliary point of the clipping plane at this part.

Vertices of each connected region obtained in the previous step are sequenced according to a connected order, and then connected to central points successively to obtain all triangles. To determine the order of vertices of a triangle, the normal of the triangle is calculated and is ensured to face below the plane, so as to obtain at least one bottom patch.

In S140, a target clipping model is determined according to the updated target triangular patch and the at least one bottom patch in the to-be-clipped model.

According to remained target triangular patches and the at least one bottom patch, the target clipping model can be determined, and the current to-be-processed video frame may be rendered according to the target clipping model at this moment to obtain a target video frame.

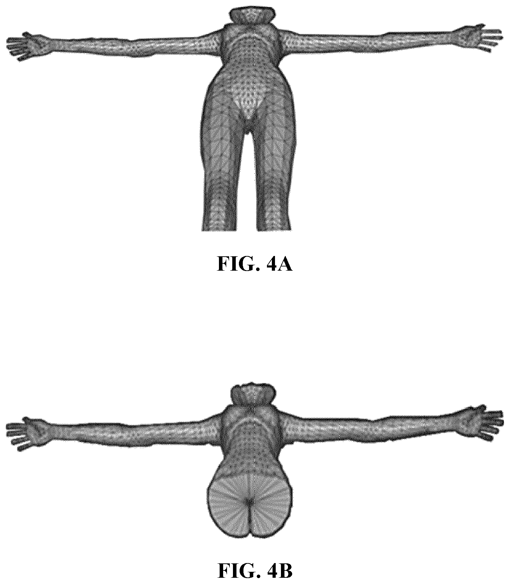

Exemplarily, (a) shown in FIG. 4 represents a to-be-clipped model. The to-be-clipped model is clipped based on the technical solutions provided in the embodiment of the present disclosure, so that the view corresponding to (b) shown in FIG. 4 can be obtained, that is, the target clipping model is obtained.

According to the technical solutions provided in the embodiment of the present disclosure, when it is detected that the model clipping condition is satisfied, the clipping plane corresponding to the to-be-clipped model may be determined; the target triangular patches and the to-be-processed triangular patches on the to-be-clipped model are determined based on the clipping plane, and at the same time, the clipping points on the to-be-processed triangular patches may be determined; the corresponding to-be-processed triangular patches are processed according to the clipping points, thus the number of the target triangular patches can be updated, and at the same time, at least one bottom patch can be determined according to each clipping point and the information of the vertices located on the clipping plane; and the target clipping model is determined through splicing processing on the bottom patch and the target triangular patches. In this manner, the problem in the related art is solved that the target three-dimensional model cannot be consistent with the clipping plane on a separation plane and at the same time certain holes appear and lead to poor visual effects; new vertices can be obtained through interpolation processing on information of original vertices, and thus bone information corresponding to the new vertices or other information bound to patches can be obtained; the segmentation plane of the to-be-clipped model can be filled to avoid goof, holes and poor visual effects. Accordingly, when the technical solution is applied to scenes of image processing, the user experience can be improved.

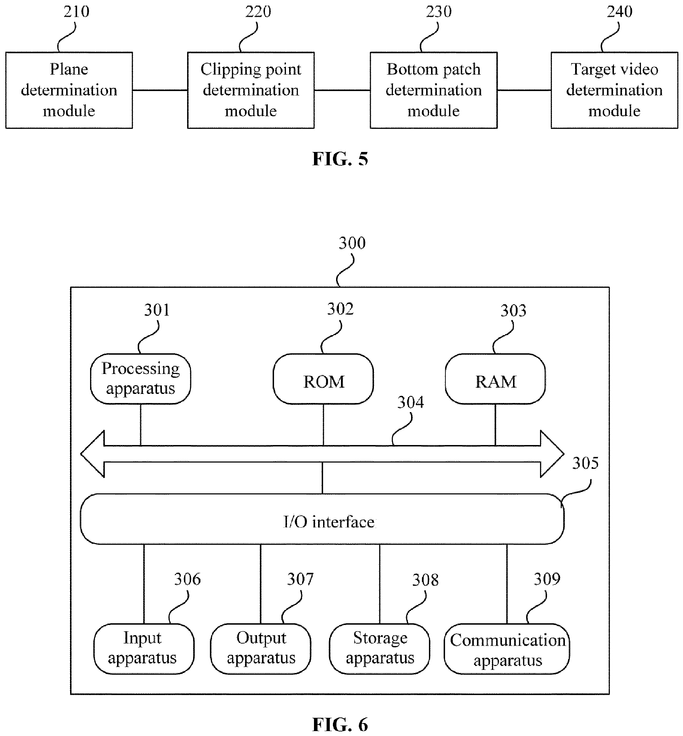

FIG. 5 is a diagram showing the structure of a mesh model processing apparatus according to an embodiment of the present disclosure. As shown in FIG. 5, the apparatus includes a plane determination module 210, a clipping point determination module 220, a bottom patch determination module 230 and a target video determination module 240.

The plane determination module 210 is configured to, in a case where it is detected that a model clipping condition is satisfied, determine a clipping plane corresponding to a to-be-clipped model. The clipping point determination module 220 is configured to determine, based on the clipping plane, target triangular patches and to-be-processed triangular patches intersecting the clipping plane and clipping points corresponding to the to-be-processed triangular patches on the to-be-clipped model. The bottom patch determination module 230 is configured to process the to-be-processed triangular patches based on the clipping points corresponding to the to-be-processed triangular patches to update the target triangular patches on the to-be-clipped model, and determine at least one bottom patch according to the clipping points corresponding to the to-be-processed triangular patches and information of vertices located on the clipping plane. The target video determination module 240 is configured to determine a target clipping model according to the updated target triangular patches on the to-be-clipped model and the at least one bottom patch.

Based on the preceding technical solutions, the model clipping condition includes at least one of conditions described below.

It is detected that a model clipping control is triggered.

A display picture includes the to-be-clipped model.

Collected audio information triggers a model clipping instruction.

A playing timestamp of a current video frame is consistent with a preset clipping timestamp.

It is determined based on display information in a display interface that model clipping is satisfied.

It is determined based on an input condition that model clipping is satisfied.

Based on the preceding technical solutions, the plane determination module 210 includes a type information determination unit and a clipping plane determination unit.

The type information determination unit is configured to determine type information of the to-be-clipped model.

The clipping plane determination unit is configured to determine the clipping plane according to the type information.

Based on the preceding technical solutions, the plane determination module 210 includes a position determination unit, a first patch determination unit and a second patch determination unit.

The position determination unit is configured to, for each triangular patch, acquire information of three vertices of a current triangular patch, and determine relative position information of the information of the three vertices and the clipping plane.

The first patch determination unit is configured to, in a case where the relative position information is located on a first side of the clipping plane, determine the current triangular patch as a target triangular patch.

The second patch determination unit is configured to, in a case where the relative position information is located on two different sides of the clipping plane, determine the current triangular patch as a to-be-processed triangular patch.

Based on the preceding technical solutions, the plane determination module 210, after the current triangular patch is determined as the to-be-processed triangular patch, is further configured to determine at least one vertex group according to to-be-processed vertices of the to-be-processed triangular patch located on the two different sides of the clipping plane, and determine clipping points corresponding to the to-be-processed triangular patch according to the at least one vertex group and a clipping plane equation corresponding to the clipping plane.

Based on the preceding technical solutions, the clipping point determination module 220 includes a distance determination unit and a clipping point determination unit.

The distance determination unit is configured to, for each of the at least one vertex group, separately determine two to-be-processed distances from two to-be-processed vertices in a current vertex group to the clipping plane.

The clipping point determination unit is configured to determine a clipping point of the current to-be-processed vertex group according to the two to-be-processed distances and a line segment corresponding to the two to-be-processed vertices.

Based on the preceding technical solutions, the clipping point determination unit includes a proportion determination unit and a clipping point determination subunit.

The proportion determination unit is configured to determine a clipping proportion according to the two to-be-processed distances.

The clipping point determination subunit is configured to determine the clipping point on the line segment based on the clipping proportion and attribute information of the two to-be-processed vertices.

Based on the preceding technical solutions, the bottom patch determination module 230 includes a patch type determination unit and a patch determination subunit.

The patch type determination unit is configured to determine a patch type of each to-be-processed triangular patch of the to-be-processed triangular patches obtained after clipping according to at least two clipping points associated with the each to-be-processed triangular patch.

The patch determination subunit is configured to update the target triangular patches on the to-be-clipped model according to the patch type.

Based on the preceding technical solutions, the bottom patch determination module 230 is further configured to perform steps described below.

In a case where the patch type is a non-splitting type, a target triangular patch is determined according to information of a remained vertex and the at least two clipping points of the each to-be-processed triangular patch.

In a case where the patch type is a splitting type, the each to-be-processed triangular patch is divided, according to information of two remained vertices and the at least two clipping points of the each to-be-processed triangular patch, into at least two triangular patches, and the divided at least two triangular patches are used as target triangular patches.

Based on the preceding technical solutions, the bottom patch determination module 230 includes a connected region determination unit and a bottom patch determination unit.

The connected region determination unit is configured to determine at least one connected region according to each clipping point of the clipping points corresponding to the to-be-processed triangular patches and information of to-be-spliced vertices of the target triangular patches located on the clipping plane.

The bottom patch determination unit is configured to determine a central point of the at least one connected region, and determine the at least one bottom patch according to the central point, the information of the to-be-spliced vertices and the corresponding clipping points.

Based on the preceding technical solutions, the apparatus is applied to a video including a three-dimensional model or an image including a three-dimensional model.

According to the technical solutions provided in the embodiment of the present disclosure, when it is detected that the model clipping condition is satisfied, the clipping plane corresponding to the to-be-clipped model may be determined; the target triangular patches and the to-be-processed triangular patches on the to-be-clipped model are determined based on the clipping plane, and at the same time, the clipping points on the to-be-processed triangular patches may be determined; the corresponding to-be-processed triangular patches are processed according to the clipping points, thus the number of the target triangular patches can be updated, and at the same time, at least one bottom patch can be determined according to the clipping points corresponding to the to-be-processed triangular patches and the information of the vertices located on the clipping plane; and the target clipping model is determined through splicing processing on the bottom patch and the target triangular patches. In this manner, the problem in the related art is solved that the target three-dimensional model cannot be consistent with the clipping plane on a separation plane and at the same time certain holes appear and lead to poor visual effects; new vertices can be obtained through interpolation processing on information of original vertices, and thus bone information corresponding to the new vertices or other information bound to patches can be obtained; the segmentation plane of the to-be-clipped model can be filled to avoid goof, holes and poor visual effects. Accordingly, when the technical solutions are applied to scenes of image processing, the user experience can be improved.

The mesh model processing apparatus provided in the embodiments of the present disclosure may execute the mesh model processing method provided in any embodiment of the present disclosure, and has function modules for and effects of executing the method.

Various units and modules included in the preceding apparatus are divided according to function logic but are not limited to such division, as long as the corresponding functions can be achieved. Moreover, the names of various function units are used for distinguishing between each other and not intended to limit the scope of the embodiments of the present disclosure.

FIG. 6 is a diagram showing the structure of an electronic device according to an embodiment of the present disclosure. Referring to FIG. 6, FIG. 6 shows a structural diagram of an electronic device 300 (such as a terminal device or a server in FIG. 6) suitable for implementing the embodiments of the present disclosure. The terminal device in the embodiment of the present disclosure may include, but is not limited to, mobile terminals such as a mobile phone, a laptop, a digital broadcast receiver, a personal digital assistant (PDA), a portable android device (PAD), a portable media player (PMP) and an in-vehicle terminal (such as an in-vehicle navigation terminal), and stationary terminals such as a digital television (TV) and a desktop computer. The electronic device 300 shown in FIG. 6 is merely an example and is not intended to limit the function and usage scope of the embodiments of the present disclosure.

As shown in FIG. 6, the electronic device 300 may include a processing apparatus 301 (such as a central processing unit and a graphics processing unit). The processing apparatus 301 may execute multiple types of appropriate operations and processing based on a program stored in a read-only memory (ROM) 302 or a program loaded from a storage apparatus 308 to a random-access memory (RAM) 303. Multiple programs and data required for the operation of the electronic device 300 are also stored in the RAM 303. The processing apparatus 301, the ROM 302 and the RAM 303 are connected to each other through a bus 304. An input/output (I/O) interface 305 is also connected to the bus 304.

Generally, the following apparatuses may be connected to the I/O interface 305: an input apparatus 306 such as a touch screen, a touch pad, a keyboard, a mouse, a camera, a microphone, an accelerometer and a gyroscope; an output apparatus 307 such as a liquid crystal display (LCD), a speaker and a vibrator; the storage apparatus 308 such as a magnetic tape and a hard disk; and a communication apparatus 309. The communication apparatus 309 may allow the electronic device 300 to perform wireless or wired communication with other devices so as to exchange data. Although FIG. 6 illustrates the electronic device 300 having various apparatuses, not all of the apparatuses illustrated herein need to be implemented or present. Alternatively, more or fewer apparatuses may be implemented or present.

According to the embodiments of the present disclosure, the process described above with reference to a flowchart may be implemented as a computer software program. For example, a computer program product is included in the embodiments of the present disclosure. The computer program product includes a computer program carried in a non-transitory computer-readable medium. The computer program includes program codes for executing the method shown in the flowchart. In such an embodiment, the computer program may be downloaded from a network and installed through the communication apparatus 309, or may be installed from the storage apparatus 308, or may be installed from the ROM 302. When the computer program is executed by the processing apparatus 301, the preceding functions defined in the method of the embodiments of the present disclosure are executed.

The names of messages or information exchanged between multiple apparatuses in the embodiments of the present disclosure are only for illustrative purposes and are not intended to limit the scope of such messages or information.

The electronic device provided in the embodiment of the present disclosure belongs to the same concept as the model processing method provided in the preceding embodiments, and for the technical details not described in detail in the embodiment, reference may be made to the preceding embodiments, and the embodiment has the same effects as the preceding embodiments.

An embodiment of the present disclosure provides a computer storage medium storing a computer program which, when executed by a processor, implements the model processing method provided in the preceding embodiments.

The preceding computer-readable medium in the present disclosure may be a computer-readable signal medium or a computer-readable storage medium or any combination thereof. The computer-readable storage medium may be, but is not limited to, for example, an electronic, magnetic, optical, electromagnetic, infrared or semiconductor system, apparatus or device, or any combination thereof. Examples of the computer-readable storage medium may include, but are not limited to, an electrical connection with one or more wires, a portable computer magnetic disk, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by or used in conjunction with an instruction execution system, apparatus or device. In the present disclosure, the computer-readable signal medium may include a data signal propagated on a baseband or as a part of a carrier, and computer-readable program codes are carried in the data signal. The data signal propagated in this manner may be in multiple forms and includes, but is not limited to, an electromagnetic signal, an optical signal or any suitable combination thereof. The computer-readable signal medium may further be any computer-readable medium other than the computer-readable storage medium. The computer-readable signal medium may send, propagate, or transmit a program used by or used in conjunction with an instruction execution system, apparatus or device. The program codes included on the computer-readable medium may be transmitted via any appropriate medium which includes, but is not limited to, a wire, an optical cable, a radio frequency (RF) or any appropriate combination thereof.

In some embodiments, clients and servers may communicate using any network protocol currently known or to be developed in the future, such as HyperText Transfer Protocol (HTTP), and may be interconnected with any form or medium of digital data communication (such as a communication network). Examples of the communication network include a local area network (LAN), a wide area network (WAN), an internet (such as the Internet) and a peer-to-peer network (such as an Ad-Hoc network), as well as any network currently known or to be developed in the future.

The computer-readable medium may be included in the electronic device or may exist alone without being assembled into the electronic device.

The computer-readable medium carries one or more programs which, when executed by the electronic device, cause the electronic device to execute functions described below.

In a case where it is detected that a model clipping condition is satisfied, a clipping plane corresponding to a to-be-clipped model is determined.

Target triangular patches and to-be-processed triangular patches intersecting the clipping plane and clipping points corresponding to the to-be-processed triangular patches on the to-be-clipped model are determined based on the clipping plane.

The to-be-processed triangular patches are processed based on the clipping points corresponding to the to-be-processed triangular patches to update the target triangular patches on the to-be-clipped model, and at least one bottom patch is determined according to the clipping points corresponding to the to-be-processed triangular patches and information of vertices located on the clipping plane.

A target clipping model is determined according to the updated target triangular patches on the to-be-clipped model and the at least one bottom patch.

Computer program codes for executing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any kind of network including a LAN or a WAN, or may be connected to an external computer (for example, via the Internet through an Internet service provider).

The flowcharts and block diagrams in the drawings show the possible architecture, function and operation of the system, method and computer program product according to various embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a special-purpose hardware-based system which executes specified functions or operations, or a combination of special-purpose hardware and computer instructions.

The units involved in the embodiments of the present disclosure may be implemented by software or hardware. The names of the units do not constitute a limitation on the units themselves. For example, a first acquisition unit may also be described as "a unit for acquiring at least two Internet protocol addresses".

The functions described above herein may be executed, at least partially, by one or more hardware logic components. For example, without limitations, example types of hardware logic components that may be used include: a field-programmable gate array (FPGA), an application-specific integrated circuit (ASIC), an application-specific standard product (ASSP), a system on a chip (SOC), a complex programmable logic device (CPLD) and the like.

In the context of the present disclosure, a machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Examples of the machine-readable storage medium may include an electrical connection based on one or more wires, a portable computer disk, a hard disk, a RAM, a ROM, an EPROM, a flash memory, an optical fiber, a CD-ROM, an optical storage device, a magnetic storage device, or any appropriate combination thereof.

According to one or more embodiments of the present disclosure, example one provides a mesh model processing method. The method includes steps described below.

In a case where it is detected that a model clipping condition is satisfied, a clipping plane corresponding to a to-be-clipped model is determined.

Target triangular patches and to-be-processed triangular patches intersecting the clipping plane and clipping points corresponding to the to-be-processed triangular patches on the to-be-clipped model are determined based on the clipping plane.

The to-be-processed triangular patches are processed based on the clipping points corresponding to the to-be-processed triangular patches to update the target triangular patches on the to-be-clipped model, and at least one bottom patch is determined according to the clipping points corresponding to the to-be-processed triangular patches and information of vertices located on the clipping plane.

A target clipping model is determined according to the updated target triangular patches on the to-be-clipped model and the at least one bottom patch.

According to one or more embodiments of the present disclosure, example two provides a mesh model processing method. The method further includes the content described below.

The model clipping condition includes at least one of conditions described below.

It is detected that a model clipping control is triggered.

A captured picture includes the to-be-clipped model.

Collected audio information triggers a model clipping instruction.

A playing timestamp of a current video frame is consistent with a preset clipping timestamp.

It is determined based on display information in a display interface that model clipping is satisfied.

It is determined based on an input condition that model clipping is satisfied.

According to one or more embodiments of the present disclosure, example three provides a mesh model processing method. The method further includes the content described below.

The step in which the clipping plane corresponding to the to-be-clipped model is determined includes steps described below.

Type information of the to-be-clipped model is determined.

The clipping plane is determined according to the type information.

According to one or more embodiments of the present disclosure, example four provides a mesh model processing method. The method further includes the content described below.

The step in which the target triangular patches and the to-be-processed triangular patches intersecting the clipping plane on the to-be-clipped model are determined based on the clipping plane includes steps described below.

For each triangular patch, information of three vertices of a current triangular patch is acquired, and relative position information of the information of the three vertices and the clipping plane is determined.

In a case where the relative position information is located on a first side of the clipping plane, the current triangular patch is determined as a target triangular patch.

In a case where the relative position information is located on two different sides of the clipping plane, the current triangular patch is determined as a to-be-processed triangular patch.

According to one or more embodiments of the present disclosure, example five provides a mesh model processing method. The method further includes the content described below.

After the current triangular patch is determined as the to-be-processed triangular patch, the step described below is further included.

At least one vertex group is determined according to to-be-processed vertices of the to-be-processed triangular patch located on the two different sides of the clipping plane, and clipping points corresponding to the to-be-processed triangular patch are determined according to the at least one vertex group and a clipping plane equation corresponding to the clipping plane.

According to one or more embodiments of the present disclosure, example six provides a mesh model processing method. The method further includes the content described below.

The step in which the clipping points corresponding to the to-be-processed triangular patch are determined according to the at least one vertex group and the clipping plane equation corresponding to the clipping plane includes steps described below.

For each of the at least one vertex group, two to-be-processed distances from two to-be-processed vertices in a current vertex group to the clipping plane are separately determined.

A clipping point of the current vertex group is determined according to the two to-be-processed distances and a line segment corresponding to the two to-be-processed vertices.

According to one or more embodiments of the present disclosure, example seven provides a mesh model processing method. The method further includes the content described below.

The step in which the clipping point of the current vertex group is determined according to the two to-be-processed distances and the line segment corresponding to the two to-be-processed vertices includes steps described below.

A clipping proportion is determined according to the to-be-processed distances.

The clipping point on the line segment is determined based on the clipping proportion and attribute information of the two to-be-processed vertices.

According to one or more embodiments of the present disclosure, example eight provides a mesh model processing method. The method further includes the content described below.

The step in which the to-be-processed triangular patches are processed based on the clipping points corresponding to the to-be-processed triangular patches to update the target triangular patches on the to-be-clipped model includes steps described below.

A patch type of each to-be-processed triangular patch of the to-be-processed triangular patches obtained after clipping is determined according to at least two clipping points associated with the each to-be-processed triangular patch.

The target triangular patches on the to-be-clipped model are updated according to the patch type.

According to one or more embodiments of the present disclosure, example nine provides a mesh model processing method. The method further includes the content described below.

The step in which the target triangular patches on the to-be-clipped model are updated according to the patch type includes steps described below.

In a case where the patch type is a non-splitting type, a target triangular patch is determined according to information of a remained vertex and the at least two clipping points of the each to-be-processed triangular patch.

In a case where the patch type is a splitting type, the each to-be-processed triangular patch is divided, according to information of two remained vertices and the at least two clipping points of the each to-be-processed triangular patch, into at least two triangular patches, and the divided at least two triangular patches are used as target triangular patches.

According to one or more embodiments of the present disclosure, example ten provides a mesh model processing method. The method further includes the content described below.

The step in which the at least one bottom patch is determined according to the clipping points corresponding to the to-be-processed triangular patches and the information of the vertices located on the clipping plane equation includes steps described below.

At least one connected region is determined according to each clipping point of the clipping points corresponding to the to-be-processed triangular patches and information of to-be-spliced vertices of the target triangular patches located on the clipping plane.

A central point of the at least one connected region is determined, and the at least one bottom patch is determined according to the central point, the information of the to-be-spliced vertices and the corresponding clipping points.

According to one or more embodiments of the present disclosure, example eleven provides a mesh model processing method. The method further includes the content described below.

The method is applied to a video including a three-dimensional model or an image including a three-dimensional model.

According to one or more embodiments of the present disclosure, example twelve provides a mesh model processing apparatus. The apparatus includes a plane determination module, a clipping point determination module, a bottom patch determination module and a target video determination module.

The plane determination module is configured to, in a case where it is detected that a model clipping condition is satisfied, determine a clipping plane corresponding to a to-be-clipped model.

The clipping point determination module is configured to determine, based on the clipping plane, target triangular patches and to-be-processed triangular patches intersecting the clipping plane and clipping points corresponding to the to-be-processed triangular patches on the to-be-clipped model.

The bottom patch determination module is configured to process the to-be-processed triangular patches based on the clipping points corresponding to the to-be-processed triangular patches to update the target triangular patches on the to-be-clipped model, and determine at least one bottom patch according to the clipping points corresponding to the to-be-processed triangular patches and information of vertices located on the clipping plane.

The target video determination module is configured to determine a target clipping model according to the updated target triangular patches on the to-be-clipped model and the at least one bottom patch.

Additionally, although multiple operations are depicted in a particular order, this should not be construed as that these operations are required to be performed in the particular order shown or in a sequential order. In certain circumstances, multitasking and parallel processing may be advantageous. Similarly, although multiple implementation details are included in the preceding discussion, these should not be construed as limiting the scope of the present disclosure. Some features described in the context of separate embodiments may also be implemented in combination in a single embodiment. Conversely, various features described in the context of a single embodiment may also be implemented in multiple embodiments individually or in any suitable sub-combination.

## Claims

1. A mesh model processing method, comprising:
in a case where it is detected that a model clipping condition is satisfied, determining a clipping plane corresponding to a to-be-clipped model;
determining, in the to-be-clipped model and based on the clipping plane, a target triangular patch, a to-be-processed triangular patch intersecting the clipping plane, and a clipping point corresponding to the to-be-processed triangular patch;
processing the to-be-processed triangular patch based on the clipping point corresponding to the to-be-processed triangular patch to update the target triangular patch in the to-be-clipped model, and determining at least one bottom patch in the to-be-clipped model according to the clipping point corresponding to the to-be-processed triangular patch and information of vertices located on the clipping plane; and
determining a target clipping model according to the updated target triangular patch and the at least one bottom patch in the to-be-clipped model.

2. The method according to claim 1, wherein the model clipping condition comprises at least one of:
detecting that a model clipping control is triggered;
detecting that the to-be-clipped model is included in a display picture;
detecting that a model clipping instruction is triggered by collected audio information;
detecting that a playing timestamp of a current video frame is consistent with a preset clipping timestamp;
determining based on display information in a display interface that model clipping is satisfied; or
determining based on an input condition that model clipping is satisfied.

3. The method according to claim 1, wherein determining the clipping plane corresponding to the to-be-clipped model comprises:
determining type information of the to-be-clipped model; and
determining the clipping plane according to the type information.

4. The method according to claim 1, wherein determining, in the to-be-clipped model and based on the clipping plane, the target triangular patch and the to-be-processed triangular patch intersecting the clipping plane comprises:
for each triangular patch of a plurality of triangular patches in the to-be-clipped model, determining relative position information of each vertex of three vertices of a current triangular patch and the clipping plane; and
in response to determining, based on the relative position information of each vertex, that the three vertices are all located on a first side of the clipping plane, determining the current triangular patch as the target triangular patch;
in response to determining, based on the relative position information of each vertex, that the three vertices are located on two different sides of the clipping plane, determining the current triangular patch as the to-be-processed triangular patch.

5. The method according to claim 4, after determining the current triangular patch as the to-be-processed triangular patch, further comprising:
determining at least one vertex group according to to-be-processed vertices of the to-be-processed triangular patch located on the two different sides of the clipping plane, and
determining the clipping point corresponding to the to-be-processed triangular patch according to the at least one vertex group and a clipping plane equation corresponding to the clipping plane.

6. The method according to claim 5, wherein determining the clipping point corresponding to the to-be-processed triangular patch according to the at least one vertex group and the clipping plane equation corresponding to the clipping plane comprises:
for each of the at least one vertex group, separately determining two to-be-processed distances from two to-be-processed vertices in a current vertex group to the clipping plane; and
determining a clipping point of the current vertex group according to the two to-be-processed distances and a line segment corresponding to the two to-be-processed vertices.

7. The method according to claim 6, wherein determining the clipping point of the current vertex group according to the two to-be-processed distances and the line segment corresponding to the two to-be-processed vertices comprises:
determining a clipping proportion according to the two to-be-processed distances; and
determining the clipping point on the line segment based on the clipping proportion and attribute information of the two to-be-processed vertices.

8. The method according to claim 1, wherein processing the to-be-processed triangular patch based on the clipping point corresponding to the to-be-processed triangular patch to update the target triangular patch in the to-be-clipped model comprises:
clipping, according to at least two clipping points corresponding to the to-be-processed triangular patch, the to-be-processed triangular patch to obtain clipped to-be-processed triangular patches and determining a patch type of each of the obtained to-be-processed triangular patches; and
updating the target triangular patch in the to-be-clipped model according to the patch type.

9. The method according to claim 8, wherein updating the target triangular patch in the to-be-clipped model according to the patch type comprises:
in a case where the patch type is a non-splitting type, determining a target triangular patch according to information of a remained vertex of three vertices of the to-be-processed triangular patch and the at least two clipping points; and
in a case where the patch type is a splitting type, dividing, according to information of two remained vertices of the three vertices of the to-be-processed triangular patch and the at least two clipping points, the to-be-processed triangular patch into at least two triangular patches, and using the divided at least two triangular patches as target triangular patches.

10. The method according to claim 1, wherein determining the at least one bottom patch in the to-be-clipped model according to the clipping point corresponding to the to-be-processed triangular patch and the information of the vertices located on the clipping plane comprises:
determining at least one connected region according to the clipping point and information of to-be-spliced vertices of the target triangular patches located on the clipping plane; and
determining a central point of the at least one connected region, and determining the at least one bottom patch according to the central point, the information of the to-be-spliced vertices and the clipping point.

11. The method according to any one of claims 1 to 10, wherein the method is applied to a video comprising a three-dimensional model or an image comprising a three-dimensional model.

12. A mesh model processing apparatus, comprising:
a plane determination module configured to, in a case where it is detected that a model clipping condition is satisfied, determine a clipping plane corresponding to a to-be-clipped model;
a clipping point determination module configured to determine, in the to-be-clipped model and based on the clipping plane, a target triangular patch and a to-be-processed triangular patch intersecting the clipping plane and a clipping point corresponding to the to-be-processed triangular patch;
a bottom patch determination module configured to process the to-be-processed triangular patch based on the clipping point corresponding to the to-be-processed triangular patch to update the target triangular patch in the to-be-clipped model, and determine at least one bottom patch in the to-be-clipped model according to the clipping point corresponding to the to-be-processed triangular patch and information of vertices located on the clipping plane; and
a target video determination module configured to determine a target clipping model according to the updated target triangular patch and the at least one bottom patch in the to-be-clipped model.

13. An electronic device, comprising:
at least one processor; and
a storage apparatus configured to store at least one program;
wherein the at least one program, when executed by the at least one processor, causes the at least one processor to implement the mesh model processing method according to any one of claims 1 to 11.

14. A storage medium comprising computer-executable instructions which, when executed by a computer processor, are configured to execute the mesh model processing method according to any one of claims 1 to 11.
